# EUROPEAN PATENT SPECIFICATION

(11) **EP 3 787 398 B1**
(45) Date of publication and mention of the grant of the patent: **26.10.2022**
(21) Application number: 19770165.9
(22) Date of filing: 02.05.2019
(51) Int. Cl.: A01K 47/00, A01K 47/06

(54) **BEE-MOVEMENT REGULATION DEVICE FOR BEEHIVES**
VORRICHTUNG ZUR REGELUNG DER BIENENBEWEGUNG FÜR BIENENSTÖCKE
DISPOSITIF DE RÉGULATION DE MOUVEMENT D'ABEILLES POUR RUCHES

(30) Priority: 02.05.2018 HU 1800142
(43) Date of publication of application: 10.03.2021
(73) Proprietor: Dömöcsök, Diana, 2051 Biatorbágy (HU); Dömöcsökné, Nálhi Ágnes, 2051 Biatorbágy (HU); Horváth-Dömöcsök, Viktória, 2051 Biatorbágy (HU)
(72) Inventor: Dömöcsök, Béla, 2051 Biatorbágy (HU)
(74) Representative: Ronaszéki, Tibor
(86) International application number: PCT/HU2019/000011
(87) International publication number: WO 2019/211637

(56) References cited:
- WO-A1-03/007704
- WO-A1-2008/044082
- WO-A1-2015/166292
- CN-A- 106 359 172

## Description

The object of the invention relates to a bee-movement regulation device for beehives, which contains a closing piece located in the vicinity of the access passage linking the internal space of the beehive to the external environment of the beehive, and moveable within the section of the access passage, and the closing member is connected to a propulsion device.

Beekeeping and the use of honey as a foodstuff reach far back into history. Due to the physiological effects of honey the significant role it plays in preserving health the demand for honey and honey-based products has grown in recent decades. Furthermore, the populous colonies of the globally distributed European honey bee biologically active in both collection and pollination play a key role in agricultural sectors suffering from a pollination crisis and in the maintenance of the biodiversity of our environment by being an excellent, effective, human-controlled solution to make up for the low number of pollinators living in the wild in the case of the majority of crops. The globally increasing demand for commercial pollination services and for quality honey had a necessary effect on the development of beehives that house the bees that unwittingly perform pollination while collecting their food. In the recent past many types of unconventional hive structure have been developed. Such a so-called "rotating brood comb" beehive is also presented in publication document number WO 2008/044082, in patent specification number KR 100757995, and in patent specification registration number HU 230.613.

The creation, shape, role and position within the beehive of the access passages allowing the bees to entering and leave the hive have not changed significantly neither in the case of conventional nor newly developed hives either. Although the establishment of the access passage linking the external environment with the internal space of the beehive has an important role in increasing the collection of nectar and pollen as well as in terms of the partial removal of pollen, and the protection of the bee colony from unfavourable external environmental. The increasing bee losses around the globe and maintaining colonies in a productive state present increasingly great problems for beekeepers. Document WO-A-2015166292 discloses a device for controlling bee-movement.

Our objective with the solution according to the invention was to overcome the deficiencies of the customary access passages used in beehives and to elaborate a regulation device that preferably influences the free cross-section of the access passage, and via this the ventilation of the beehive, the movement of the bees, the direction of their entry and departure, and its transmittance ability that, corresponding to the physical, chemical and biological conditions and parameters of the external environment, enables, or even prevents, the replacement of the air the bees cannot control themselves, the movement of the bees and makes it difficult for pests dangerous to the bee products accumulated in the hive and the bee colony to penetrate into the internal space of the beehive, in such a way that this regulation takes place in a substantially automatic way.

The recognition that led to the structure according to the invention was that if one or more closing pieces with a novel structure, and with several openings of different size and shape provided with a unique, automatic propulsion device are positioned in the section of a conventionally established access passage, such as on one of its sides or even within it that is capable of changing the free section of the access passage at one or more positions in relation to given conditions in such a way that the propulsion device inserts the closing piece part currently suitable on the basis of an assessment of the environmental parameters into the given section of the access passage, then the free movement of the bees can be regulated, and so restricted, and in addition the movement of pests and parasites can be prevented, and so the task can be solved.

In accordance with the set objective bee-movement regulation device for beehives according to the invention, which contains a closing piece located in the vicinity of the access passage linking the internal space of the beehive to the external environment of the beehive, and moveable within the section of the access passage, and the closing member is connected to a propulsion device, - is set up in such a way that at least two openings positioned at a given distance from each other, with a position and shape different to each other, and at least one closing surface are established in the closing piece, the propulsion device has a drive part-unit, a position-sensing part-unit and a control part-unit in a signal-transmission connection with the drive part-unit and the position-sensing part-unit, where the control part-unit is in a signal-transmission connection with sensors for determining the physical and/or chemical characteristics of the external environment, and the control part-unit has a memory unit for storing reference values, furthermore the closing piece is coupled with a regulation piece, where the regulation piece is separated from the closing piece by a space with the help of at least one spacer body, the regulation piece is provided with a position-adjustment device, and the position-adjustment device has a propulsion part-unit and position-sensing part-unit, furthermore the propulsion part-unit and the position-sensing part-unit are in a signal-transmission connection with the control part-unit, the regulation piece is provided with at least two openings with a position and shape different to each other, and with at least one closing surface, furthermore a transfer channel is established in the space between the closing piece and the regulation piece that is at least partially surrounded by a delimiting surface, and the closing piece and the regulation piece are arranged along two sides of the transfer channel in such a way so that they may move, and therefore the transfer channel is either partially or completely opened as a result of the openings dependent on the positions of the closing piece and the regulation piece or impenetrably closed off to bees and pests by the closing surface.

A further feature of the regulation device according to the invention may be that a supplementary channel at least partially surrounded by a delimiting surface is established in the vicinity of the access passage in the space, where the supplementary channel has an exit opening that opens to the external environment and an entry opening that opens to the internal space of the beehive, and a passage direction limiting piece is arranged between the exit opening and the entry opening in the supplementary channel in such a way that it may be moved.

In the case of another embodiment of the regulation device the regulation piece has a movement path that also leads to in front of the entry opening of the supplementary channel, and therefore the entry opening of the supplementary channel is partially or entirely opened by the openings dependent on the position of the regulation piece or closed off by the closing surface.

In the case of another different embodiment of the invention an entry auxiliary passage at least partially surrounded by a delimiting surface is established in the space in the vicinity of the transfer channel or the supplementary channel, where the entry auxiliary passage has an entry opening connected to the external environment, and an exit opening that opens to the internal space of the beehive, and an exit prevention piece is arranged in the entry auxiliary passage between the entry opening and the exit opening in such a way so that it may move. Optionally the closing piece also has a movement path that leads to in front of the entry opening of the entry auxiliary passage, and therefore the entry opening of the entry auxiliary passage is partially or entirely opened by the openings dependent on the position of the closing piece or closed off by the closing surface.

In the case of yet another different embodiment of the invention the drive part-unit connected to the closing piece and/or the propulsion part-unit connected to the regulation piece is a mechanism provided with an electric motor. The position-sensing part-unit cooperating with the drive part-unit and/or the position-sensing part-unit cooperating with the regulation piece is a digital signal transmitter.

In the case of yet another different embodiment of the device among the openings of the regulation piece the one comprises a group of bores lined up next to one another with a diameter of between 4.8 and 5.5 mm, another comprises a group of bores with a diameter of between 6 and 10 mm, while the openings of the closing piece comprise a slit or arranged group of slits with a greatest opening size of less than 3 mm.

In the case of a preferable embodiment of the invention the closing piece, the regulation piece, the propulsion device, the position-adjustment device, the spacer body and the transfer channel are located in a single housing.

In the case of yet another different embodiment of the regulation device pollen release openings with a greatest opening size of less that 5.1 mm are established in the lower part of the delimiting surface of the transfer channel facing the support carrying the beehive.

The regulation device according to the invention has numerous preferable characteristics. The most important of these is that as a consequence of the completely novel closing piece and the unique regulation piece cooperating with it, the passable cross-section of the access passage of the beehive may be varied in accordance with the time of day, wind speed, humidity, temperature, season, and in accordance with the necessity to remove the pollen that has an enhancing effect on collection/pollination and to provide protection against pests.

An advantage originating from this is that, on the one part, the regulation device helps the bees to perform collection at the optimal time, on the second part, it provides protection in critical situations against pests, parasites and robber bees trying to penetrate the beehive, and, on the third part, it makes it simple to winter the beehives and also provide effective protection in winter. All these controlled conditions make it possible to establish populous, healthy, biologically active, therefore more resistant, highly productive bee colonies and maintain them without stress, which also represents an important advantage in terms of honey production and the successful pollination of crops.

It is also an important advantage that following suitable programming the regulation device is capable of carrying out its task without human intervention, therefore reducing the beekeeper's daily workload, and also makes the life of the bee colony living in the beehive safer.

Another advantage is that the regulation device according to the invention is not only for use in new beehives, it may also be simply connected to older beehives, therefore their yield. the protection of the bees and their support can be enhanced.

Yet another advantage is that the regulation device itself may be assembled from simple structural elements, it is easy to install and can be reliably operated, even being controlled and monitored from a remote distance, which was not at all implemented in the case of known beehives.

Over all with the help of the solution according to the invention supercolonies can be created that are monitored and controlled in mobile devices, under hygienic and stress-free conditions, which may be protected from incorrect beekeeping treatments, unfavourable environmental effects, pathogens and pests, especially from the destruction caused by *Varroa destructor.*

Further details of the regulation device according to the invention will be explained by way of exemplary embodiments with reference to figures, wherein:
Figure 1 depicts a perspective view of a possible version of the regulation device according to the invention in partial cross-section,
Figure 2 depicts a version of a method of positioning the regulation device according to the invention in the beehive, with the beehive in side view, in partial cross-section,
Figure 3 depicts another version of a method of positioning the regulation device according to the invention in the beehive, with the beehive in side view, in partial cross-section,
Figure 4 depicts another different version of a method of positioning the regulation device according to the invention in the beehive, with the beehive in side view, in partial cross-section,
Figure 5 depicts a further method of positioning the regulation device according to the invention, with the beehive in side view, in partial cross-section,
Figure 6 depicts a schematic view of another embodiment of the regulation device according to the invention in partial cross-section.

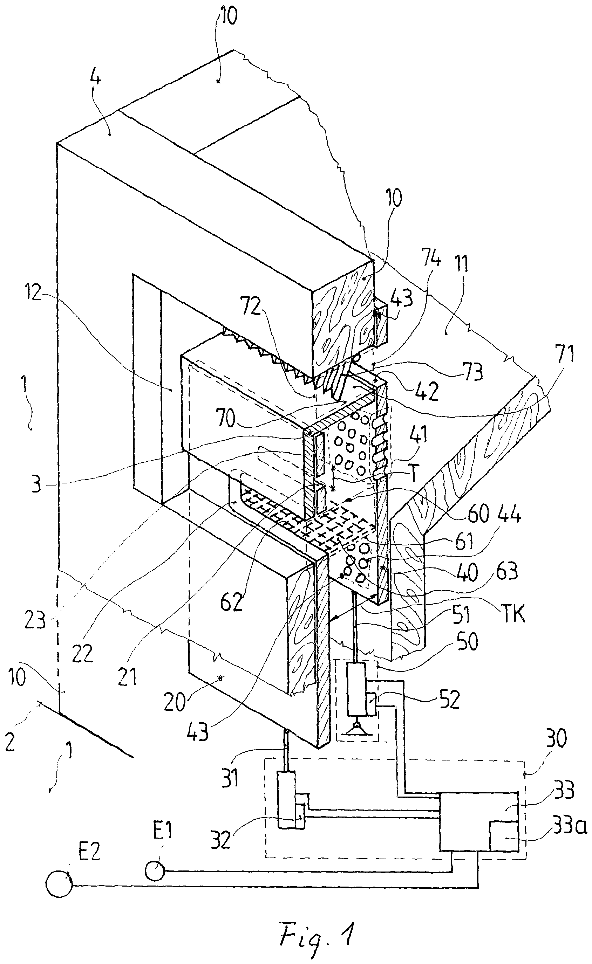

A version of the regulation device according to the invention is shown in figure 1 that is preferably located in the internal space 11 of a cylindrical brood chamber beehive 10. The beehive 10 naturally has an access passage 12, which links the internal space 11 of the beehive 10 to the external environment 1.

However, contrary to the conventional case it may be observed how the closing piece 20, the regulation piece 40, and the spacer body 3 separating these from each other by a space "TK" are arranged in the access passage 12 of the beehive 10. It should be noted here that the spacer body 3 itself may be a part of the beehive 10, but it is preferable if an independent spacer body 3 is interposed between the closing piece 20 and the regulation piece 40 for partially covering the closing piece 20, and for separating the exit opening 72 and the transfer channel 60; also for multiplying the functions of the closing piece 20 and the regulation piece 40 resulting from their harmonised displacement.

The transfer channel 60 is positioned in the space "TK" between the closing piece 20 and the regulation piece 40, and is partially surrounded by a delimiting surface 61. The delimiting surface 61 is partially comprised of the beehive 10, the closing piece 20, the regulation piece 40 and the lower part 62 established in a grid-like manner. The lower part 62 located towards the support 2 carrying the beehive 10 has pollen release openings 63, while the closing piece 20, in the case of this embodiment, has an opening 21, opening 22 and closing surface 23, and the regulation piece 40 has an opening 41, opening 42 and opening 44, and furthermore two closing surfaces 43 encompassing the opening 41. opening 42 and opening 44 from two sides. The lower part 62 may be, for example, a wire net with the appropriate aperture size or even a grid made of wire rods, where the greatest size of the pollen release openings is smaller than 3.2 mm. Therefore the bees moving between the internal space 11 of the beehive 10 and the external environment 1 are able to move in the lower part 62, but are unable to pass under it.

The closing piece 20 is preferably a plate made of plastic, for example, in which the differing opening 21, opening 22 and closing surface 23 are arranged in a determined way. The opening 21 is an opening with smaller dimensions then the opening 22, while the closing surface 23 is a completely closed off part of the closing piece 20, which completely closes off the free cross-section of the access passage 12 of the beehive 10 that opens to the external environment 1. The opening 21 may be an area provided with a net or grid with an opening size of less than 3 mm, for example. The opening 21, opening 22 and the closing surface 23 are arranged on the closing piece 20 at a determined distance "T" from each other. It should be noted here that the distance "T" between the opening 21 and the opening 22, and between the opening 21 and the closing surface 23 do not have to be equal in magnitude. It is obvious that the order of the openings with varying function may also differ.

The situation is similar also in the case of the regulation piece 40. In the case of the given embodiment the regulation piece 40 is also a plate made of plastic, in which here the opening 41, opening 42, and two closing surfaces 43 encompassing the opening 41 and the opening 42 are arranged. The opening 41 comprises an arranged group of bores with a diameter of preferably 5.1 mm, which may serve to separate at least a part of the useful burden of the bees returning to the internal space 11 of the beehive 10 from their collection activities. While the other opening 42 is a significantly larger aperture, through which the bees can freely leave the beehive in the case it is adjusted to a given position. The opening 44 comprises an arranged group of bores with a diameter of 7 mm. Here also the closing surfaces 43 are each formed by a specific part of the material of the regulation piece 40. It is also obvious that the opening 41, the opening 42 and the closing surfaces 43 of the regulation piece 40 are at a given distance from each other.

Figure 1 also well illustrates that in the case of the given embodiment further a supplementary channel 70 encompassed by a delimiting surface 71 is located in the vicinity of the transfer channel 60, preferably in the space "TK". This supplementary channel 70 is not a mandatory part of the solution according to the invention, but may represent further assistance in the regulation of the movement of the bees.

Also the supplementary channel 70 has an exit opening 72 towards the external environment 1 and an entry opening 74 facing the internal space 11 of the beehive 10. The passage direction limiting piece 73 is located between the exit opening 72 and the entry opening 74, between the delimiting surfaces 71 of the supplementary channel 70, which is arranged in the supplementary channel 70 in such a way that the bees can pass through it from the direction of the entry opening 74 in the direction of the exit opening 72, but also in such a way that they are unable to pass backwards into the internal space 11 of the beehive 10. In this way the returning bees are forced to pass through the transfer channel 60 to get into the internal space 11 of the beehive 10, in the course of which the must pass over the opening 41, the opening 42 or the opening 44 of the regulation piece 40 standing in a given position and forming a part of the delimiting surface 61 of the transfer passage 60.

The movement of the closing piece 20 in front of the transfer channel 60 is made possible by the propulsion device 30. The propulsion device 30 has a drive part-unit 31, a position-sensing part-unit 32, as well as a control part-unit 33 connected to these. The drive part-unit 31 may be a mechanism provided with an electric motor, while the position-sensing part-unit 32 is preferably a digital signal transmitter that detects angular rotation or travel along a linear path. A memory unit 33a also belongs to the control part-unit 33, which, among other things, contains the previous measurement results required for the appropriate movement of the closing piece 20 and other data.

The same signal transmission connection exists between the propulsion part-unit 51 and the position-sensing part-unit 52 of the position-adjustment device 50, and the control part-unit 33 of the propulsion device 30.

The position-adjustment device 50 is responsible for the appropriate movement of the regulation piece 40 in front of the transfer channel 60 and in front of the entry opening 74 of the supplementary channel 70. It should be noted here that the position-adjustment device 50 may also have an independent control part-unit, but it is more preferable to implement the harmonised movement of the closing piece 20 and the regulation piece 40 with the help of a single control part-unit 33.

It is also shown in figure 1 that in addition to the drive part-unit 31 and the position-sensing part-unit 32, as well as the propulsion part-unit 51 and the position-sensing part-unit 52, the control part-unit 33 is in signal transmission connection with the sensor "E1" and the sensor "E2". The sensor "E1" and the sensor "E2" are located outside of the beehive and send information about the physical characteristics of the external environment 1 to the control part-unit 33. In the present case the sensor "E1" measures environmental temperature, while the sensor "E2" measures humidity. Naturally the control part-unit 33 may be connected to more such sensors in addition to the sensor "E1" and the sensor "E2" that may provide information to the control part-unit 33 about other physical characteristics, such as external temperature, wind speed, or chemical characteristics, such as fragrance values.

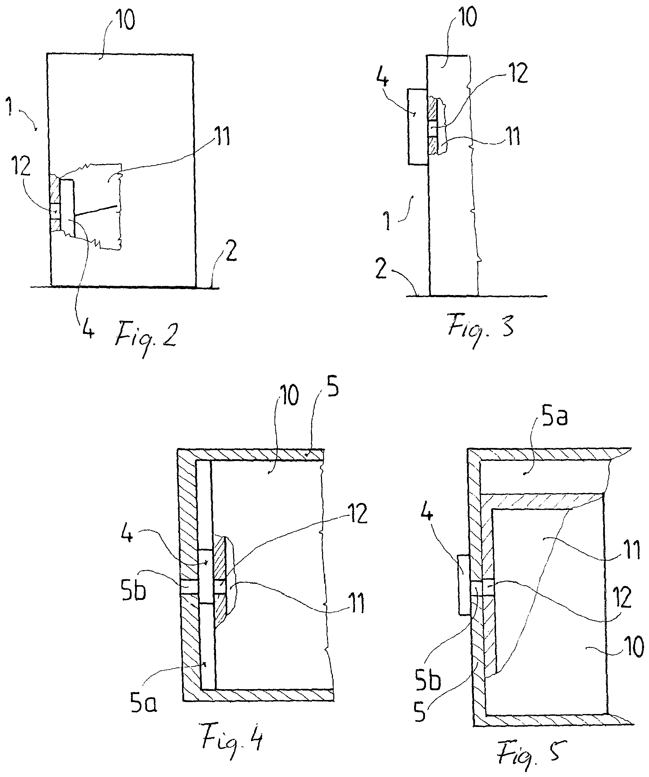

It should also be mentioned that the closing piece 20 and the propulsion device that moves it, as well as the regulation piece 40 and the position-adjustment device 50 responsible for changing its position, furthermore the spacer body 3 separating these from each other by the space "TK", and the transfer channel 60 created in the space "TK", and. optionally the supplementary channel may be installed in a completely independent housing 4, as illustrated in figure 2, figure 3 and figure 4.

An arrangement may be observed in figure 2 where the independent housing 4 comprising the entire regulation device is secured in the internal space 11 of the beehive 10 at the internal side of the access passage 12 of a conventionally constructed beehive 10.

Figure 3 shows an arrangement where the housing 4 is secured to the beehive 10 on the side of the access passage 12 of the beehive 10 towards the external environment 1, and so in this way no single element of the regulation device is installed in the internal space 11 of the beehive 10.

Figure 4 shows a schematic view of an embodiment where the beehive 10 is located in the storage space 5a of a protective container 5. The housing 4 is interposed between the access passage 12 of the beehive 10 and the passage 5b of the protective container 5 so that the passage 5b of the protective container 5 and the access passage 12 of the beehive 10 are linked to each other via the transfer channel 60 established in the housing 4 and, optionally, via the supplementary channel 70.

Figure 5 depicts an embodiment where the housing 4 is fitted to the external side of the passage 5b of the protective container 5. In this case the housing 4 itself is not directly connected to the beehive.

The use of the regulation device according to the invention and presented in detail in figure 1 is as follows. First of all it is preferable to load the memory unit 33a of the control part-unit 33 of the propulsion device 30 with reference data that contain the environmental parameters observable in the area where the given beehive 10 is located, preferably in terms of time of day and, optionally, in terms of longer periods. This is important because these data are required for the proper operation of the regulation device. After the data have been loaded into the memory unit 33a, the structure units of the regulation device may be installed in or onto the appropriate part of the access passage 12 of the beehive 10, either independently or with the help of the housing 4. Finally the sensor "E1" and the sensor "E2", and optionally additional sensors, connected to the control part-unit 33 of the propulsion device 30 may be positioned on the external surface of the beehive 10, or, for example in the case of the version presented in figure 4, on the external surface of the protective container 5, or in the vicinity of these surfaces.

During the operation of the regulation device in the case that the control part-unit 33 of the propulsion device 30 is switched on the provision of electricity to the drive part-unit 31, as well as to the propulsion part-unit 51 of the position-adjustment device 50 may take place depending on the command given by the control part-unit 33 of the propulsion device 30.

Furthermore the position-sensing part-unit 32, the position-sensing part-unit 52, the sensor "E1" and the sensor "E2" become operable. In this way the position-sensing part-unit 32 supplies the data on the position of the drive part-unit 31, and with this the position currently occupied by the closing piece 20. The position-sensing part-unit 52 supplies the data on the position of the propulsion part-unit 51 and with this on the position occupied by the regulation piece 40. While the sensor "E1" and the sensor "E2" provide information on the physical characteristics prevailing in the external environment 1, such as temperature or humidity or wind speed, or other information influencing the bees' collection activities, such as time of day, i.e. the degree of illumination.

The data arriving from the position-sensing part-unit 32, from the position-sensing part-unit 52. from the sensor "E1" and the sensor "E2" are transmitted to the control part-unit 33 of the propulsion device 30 via the signal transmission channels. It must be mentioned here that these signal transmission channels, not shown in the figures, may be cable connection implemented with the use of electric cables, or even wireless RF connections.

When the control part-unit 33 requests the data of the position-sensing part-unit 32, the position-sensing part-unit 52, the sensor "E1" and the sensor "E2", then the microcomputer located in the control part-unit 33, on the one part, stores the data from among these data that arrive into the control part-unit 33 in the memory unit 33a and, on the other part, it evaluates this data and compares the results obtained to the reference data previously loaded as initial data into the memory unit 33a of the regulation device. Then on the basis of this comparison it selects the appropriate instruction and sends a command to the drive part-unit 31 of the propulsion device 30 and/or to the propulsion part-unit 51 of the position-adjustment device to move to the appropriate extent, and in this way to set the regulation piece 40 and/or closing piece 20 into the desired position.

It is pertinent to mention here that in the case that wireless communication is safe, a control part-unit 33 is conceivable that transmits the information received to a remote access facility with the help of an RF connection. The evaluation in this case takes place in the remote access facility, and it is from there that the instructions relating to the operation of the position-adjustment device 50 are sent back for execution to the control part-unit 33 of the regulation deice secured to the beehive 10.

After the evaluation and the selection of the appropriate instruction the control part-unit 33 sends a signal to the drive part-unit 31 of the propulsion device 30 and places it into operation. The position-sensing part-unit 32 constantly informs the control part-unit 33 of the movement of the drive part-unit 31 and when the desired position is achieved it sends a signal to the control part-unit 33, which stops the operation of the drive part-unit 31. While moving the drive part-unit 31 takes the closing piece 20 with it, in other words it moves the closing piece 20, pulling downwards or pushing upwards in a substantially vertical direction with respect to the arrangement depicted in figure 1, in the section of the access passage 12 of the beehive 10, along the transfer channel 60. When the closing piece 20 is moved the positions of the opening 21, the opening 22, and the closing surface 23 as compared to the access passage 12 and the transfer channel 60 changes.

Optionally, in the place of the closing surface 23 the smaller opening 21 or the large opening 22 are moved into the transfer channel 60. The movement possibilities of the individuals of the bee colony living in the internal space 11 of the beehive 10 may change in accordance with this.

Simultaneously with the movement of the closing piece 20, or independently of it, the propulsion part-unit 51 of the position-adjustment device 50 may also receive commands from the control part-unit 33. According to this the propulsion part-unit 51 may also move in a way monitored by the position-sensing part-unit 52, as a result of which the regulation piece 40 may slide up and down along the transfer channel 60 and in front of the entry opening 74 of the supplementary channel 70. In other words this regulation piece 40 is not only able to influence access through the transfer channel 60, but is also capable of closing off the entry opening 74 of the supplementary channel 70, which is of fundamental importance from the point of view of the ability to get out of the internal space 11 of the beehive 10.

After a given amount of time has passed, when the control part-unit 33 once again requests the data of the position-sensing part-unit 32, the position-sensing part-unit 52, the sensor "E1" and the sensor "E2", then a new evaluation process is performed. On the basis of the values received from the sensor "E1" and the sensor "E2" the control part-unit 33. with the help of the reference data stored in the memory unit 33a, decides whether to send a new command to the drive part-unit 31 and/or to the propulsion part-unit 51. If not then nothing happens until the next data retrieval cycle. If it does, then the previously described process is repeated.

It should be noted here that if, for example, the control part-unit 33 determines that the temperature, humidity and wind speed are suitable and it is a daytime period on the basis of the information sent by the sensor "E1" and the sensor "E2", then with a command sent to the drive part-unit 31 it sets the closing piece 20 to a position so that the opening 22 realising complete opening is positioned in front of the transfer channel 60. While it instructs the propulsion part-unit 51 to set the regulation piece 40 so that the opening 42 creating free passage is in front of the entry opening 74 of the supplementary channel 70, while the opening 41 with the bores for collecting pollen is in front of the transfer channel 60.

In this case the bees in the internal space 11 of the beehive 10 can get into the supplementary channel 70 through thé opening 42 and the entry opening 74, and through the passage direction limiting piece 73 they reach the exit opening 72 and can fly out to collect in the external environment 1. However, they are unable to return towards the entry opening 74 of the supplementary channel 70 through the exit opening 72 due to the passage direction limiting piece 73.

In this way they are forced to get into the transfer channel 60 through the access passage 12 of the beehive 10 via the opening 22 of the closing piece 20. Passing through the lower part 62 of the transfer channel 60 they arrive at the opening 41 of the regulation piece 40. However, they are only able pass through this if they crawl through one of the members of the arranged group of bores of the opening 41 with a diameter of between 4.8 and 5.5 mm, for example a 5.1 mm bore. During this, however, a part of the pollen collected by them is "released" in the direction of the lower part 62 of the transfer channel 60.

When after this the control part-unit 33 detects that sunset is approaching on the basis of the signals of the sensor "E1" and the sensor "E2", by sending a command to the drive part-unit 31. it moves the closing piece 20 so that the closing surface 23 gets in front of the transfer channel 60. Simultaneously with this, with the help of the propulsion part-unit 51, it takes the regulation piece 40 into a position so that the closing surface 43 above the opening 42 gets in front of the entry opening 74 of the supplementary channel 70. In this way the access passage 12 of the beehive 10 is closed off and, on the one part, are unable to fly out. On the other part, certain pests are unable to get into the internal space 11 of the beehive 10.

It is obvious that depending on the number, arrangement and pattern of the various openings 21 and closing surfaces 23 located on the closing piece 20, and of the differing openings 41 and closing surfaces 43 on the regulation piece 40 a large number of movement regulation possibilities are created, which the control part-unit 33 of the propulsion device 30 may set on the basis of the signals given by the various sensors "E1" and sensors "E2". Therefore, in the case of a well assembled reference database the life of a bee colony in a beehive 10 may be controlled automatically without direct human intervention, the ability of the bees to leave the beehive can be regulated, and the beehive 10 can be closed off and so protection against pests and parasites can be improved.

It is important to note that optimal closing of the beehive 10 in the winter period can be realised with the suitable adjustment of the closing piece 20 and the regulation piece 40.

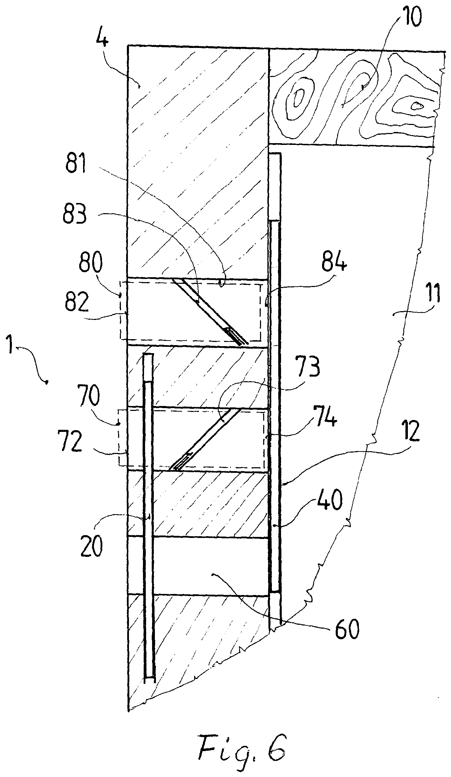

Moving over now to figure 6, it shows a housing 4 where the housing 4 installed in the access passage 12 of the beehive 10 does not only have a transfer channel 60 and supplementary channel 70, it also has a further entry auxiliary passage 80.

In the case of the given embodiment, the delimiting surface 81 of the entry auxiliary passage 80 is at least partly formed by certain structural elements of the housing 4. While the supplementary channel 70, the exit opening 72 of which faces the external environment 1, and the entry opening 74 faces the internal space 11 of the beehive 10, and the passage direction limiting piece 73 prevent passage of the bees from the direction or the exit opening 72, the entry opening 82 of the entry auxiliary passage 80 is linked to the external environment 1, and the exit opening 84 opens to the internal space of the beehive 10. In the case of the entry auxiliary passage 80 the exit prevention piece 83 permits passage of the bees only from the direction of the external environment 1, through the entry opening 82 in the direction of the exit opening 84, in other words it permits passage of the bees towards the internal space 11 of the beehive 10.

Figure 6 also shows that the entry opening 82 of the entry auxiliary passage 80 is positioned in the access passage 12 of the beehive 10 so that the movement path of the closing piece 20 passes in front of the entry opening 82. Therefore with the closing piece 20 in its given position, when the opening 21 or the opening 22 is in front of the entry opening 82 of the entry auxiliary passage 80, the entry opening 82 is in open position. While if the closing surface 23 of the closing piece 20 moves to in front of the entry opening 82 of the entry auxiliary passage 80, then the entry auxiliary passage 80 is placed in closed state.

The purpose of the entry auxiliary passage 80 makes it possible for the individual bees of the colony still out collecting when the sun sets to safely return to the beehive 10 even if the closing piece 20 and the regulation piece 40 are positioned in front of the transfer channel 60 and the supplementary channel so that the individual bees of the colony are unable to pass through them in any direction. In this case the bees stuck outside are able to get into the entry auxiliary passage 80 through the still open entry opening 83 and past the exit prevention piece 83, towards the internal space 11 of the beehive 10. in other words progressing without restriction in the direction of the exit opening 84. then after reaching the exit opening 84 they can enter the protected internal space 11 of the beehive 10.

It can be said then that the entry auxiliary passage 80 is essentially a security "door" to ensure that the bees still outside after beehive closure at sunset can return safely, the open or close state of which is determined by the given position of the closing piece 20. The closing piece 20 is set into the desired position by the drive part-unit 31 on the command of the control part-unit 33 of the propulsion device 30 on the basis of the signal given by the sensor "E1" and the sensor "E2" that monitor the environmental conditions.

In addition to this the entry auxiliary passage 80 is capable of "collecting" the bees at any time of day by being brought into operation according to the instructions given by the beekeeper. such as in advance of chemical spraying being performed in the collection areas.

It is obvious that the closing piece 20, the regulation piece 40, the propulsion device 30, the position-adjustment device 50, the spacer body 3, as well as the transfer channel 60, the supplementary channel 70 and the entry auxiliary passage 80 forming parts of the bee movement regulation device do not have to be installed in a single housing 4. A version is also conceivable in which one or more of the previously listed structural elements, or their components are integrated into the beehive 10 itself. This however is of no significance from the point of view of the use of the solution, therefore these various versions also belong to the scope of protection of the solution.

The regulation device according to the invention may be used to good effect in all cases when the life of a beehive 10 is desired to be effectively and cost-efficiently controlled with minimal human intervention, but so as to be in as great harmony as possible with the environmental conditions.

**List of references**

| | | | |
|---|---|---|---|
| 1 | external environment | | |
| 2 | support | | |
| 3 | spacer body | | |
| 4 | independent housing | | |
| 5 | protective container | 5a | storage space |
| | | 5b | passage |
| 10 | beehive | 11 | internal space |
| | | 12 | access passage |
| 20 | closing piece | 21 | opening |
| | | 22 | opening |
| | | 23 | closing surface |
| 30 | propulsion device | 31 | drive part-unit |
| | | 32 | position-sensing part-unit |
| | | 33 | control part-unit |
| | | 33a | memory unit |
| 40 | regulation piece | 41 | opening |
| | | 42 | opening |
| | | 43 | closing surface |
| | | 44 | opening |
| 50 | position-adjustment device | 51 | propulsion part-unit |
| | | 52 | position-sensing part-unit |
| 60 | transfer channel | 61 | delimiting surface |
| | | 62 | lower part |
| | | 63 | pollen release opening |
| 70 | supplementary channel | 71 | delimiting surface |
| | | 72 | exit opening |
| | | 73 | passage direction limiting piece |
| | | 74 | entry opening |
| 80 | entry auxiliary passage | 81 | delimiting surface |
| | | 82 | entry opening |
| | | 83 | exit prevention piece |
| | | 84 | exit opening |
| "E1" | sensor | | |
| "E2" | sensor | | |
| "T" | distance | | |
| "TK" | space | | |

## Claims

1. Bee-movement regulation device for beehives, which contains a closing piece (20) located in the vicinity of the access passage (12) linking the internal space (11) of the beehive (10) to the external environment (1) of the beehive (10), and moveable within the section of the access passage (12), and the closing member (20) is connected to a propulsion device (30), **characterised by** that at least two openings (21, 22) positioned at a given distance (T) from each other, with a position and shape different to each other, and at least one closing surface (23) are established in the closing piece (20), the propulsion device (30) has a drive part-unit (31), a position-sensing part-unit (32) and a control part-unit (33) in a signal-transmission connection with the drive part-unit (31) and the position-sensing part-unit (32), where the control part-unit (33) is in a signal-transmission connection with sensors (E1, E2) for determining the physical and/or chemical characteristics of the external environment (1), and the control part-unit (33) has a memory unit (33a) for storing reference values, furthermore the closing piece (20) is coupled with a regulation piece (40), where the regulation piece (40) is separated from the closing piece (20) by a space (TK) with the help of at least one spacer body (3), the regulation piece (40) is provided with a position-adjustment device (50), and the position-adjustment device (50) has a propulsion part-unit (51) and position-sensing part-unit (52), furthermore the propulsion part-unit (51) and the position-sensing part-unit (52) are in a signal-transmission connection with the control part-unit (33), the regulation piece (40) is provided with at least two openings (41, 42, 44) with a position and shape different to each other, and with at least one closing surface (43), furthermore a transfer channel (60) is established in the space (TK) between the closing piece (20) and the regulation piece (40) that is at least partially surrounded by a delimiting surface (61), and the closing piece (20) and the regulation piece (40) are arranged along two sides of the transfer channel (60) in such a way so that they may move, and therefore the transfer channel (60) is either partially or completely opened as a result of the openings (21, 22, 41,42, 44) dependent on the positions of the closing piece (20) and the regulation piece (40) or impenetrably closed off to bees and pests by the closing surface (23, 43).

2. Regulation device according to claim 1, **characterised by** that a supplementary channel (70) at least partially surrounded by a delimiting surface (71) is established in the vicinity of the access passage (60) in the space (TK), where the supplementary channel (70) has an exit opening (72) that opens to the external environment (1) and an entry opening (74) that opens to the internal space (11) of the beehive (10), and a passage direction limiting piece (73) is arranged between the exit opening (72) and the entry opening (74) in the supplementary channel (70) in such a way that it may be moved.

3. Regulation device according to claim 2, **characterised by** that the regulation piece (40) has a movement path that also leads to in front of the entry opening (72) of the supplementary channel (70), and therefore the entry opening (72) of the supplementary channel (70) is partially or entirely opened by the openings (41, 42, 44) dependent on the position of the regulation piece (40) or closed off by the closing surface (43).

4. Regulation device according to any of claims 1 to 3, **characterised by** that an entry auxiliary passage (80) at least partially surrounded by a delimiting surface (81) is established in the space (TK) in the vicinity of the transfer channel (60) or the supplementary channel (70), where the entry auxiliary passage (80) has an entry opening (82) connected to the external environment (1), and an exit opening (84) that opens to the internal space (11) of the beehive (10), and an exit prevention piece (83) is arranged in the entry auxiliary passage (80) between the entry opening (82) and the exit opening (84) in such a way so that it may move.

5. Regulation device according to claim 4, **characterised by** that the closing piece (20) also has a movement path that leads to in front of the entry opening (82) of the entry auxiliary passage (80), and therefore the entry opening (82) of the entry auxiliary passage (80) is partially or entirely opened by the openings (21, 22) dependent on the position of the closing piece (20) or closed off by the closing surface (23).

6. Regulation device according to any of claims 1 to 5, **characterised by** that the drive part-unit (31) connected to the closing piece (20) and/or the propulsion part-unit (51) connected to the regulation piece (40) is a mechanism provided with an electric motor.

7. Regulation device according to claim 6, **characterised by** that the position-sensing part-unit (32) cooperating with the drive part-unit (31) and/or the position-sensing part-unit (52) cooperating with the regulation piece (40) is a digital signal transmitter.

8. Regulation device according to any of claims 1 to 7, **characterised by** that among the openings (41, 42, 44) of the regulation piece (40) the one comprises a group of bores lined up next to one another with a diameter of between 4.8 and 5.5 mm, another comprises a group of bores with a diameter of between 6 and 10 mm.

9. Regulation device according to any of claims 1 to 8, **characterised by** that the openings (21, 22) of the closing piece (20) comprise a slit or arranged group of slits with a greatest opening size of less than 3 mm.

10. Regulation device according to any of claims 1 to 9, **characterised by** that the closing piece (20), the regulation piece (40), the propulsion device (30), the position-adjustment device (50), the spacer body (3) and the transfer channel (60) are located in a single housing (4).

11. Regulation device according to any of claims 1 to 10, **characterised by** that pollen release openings (63) with a greatest opening size of less that 5.1 mm are established in the lower part (62) of the delimiting surface (61) of the transfer channel (60) facing the support (2) carrying the beehive (10).

## Patentansprüche

1. Vorrichtung zur Regulierung der Bienenbewegung für Bienenstöcke, die ein Verschlussteil (20) enthält, das in der Nähe des Zugangsdurchgangs (12) angeordnet ist, der den Innenraum (11) des Bienenstocks (10) mit der äußeren Umgebung (1) des Bienenstocks (10) verbindet, und das innerhalb des Abschnitts des Zugangsdurchgangs (12) beweglich ist, wobei das Verschlussteil (20) mit einer Antriebsvorrichtung (30) verbunden ist, **dadurch gekennzeichnet, dass** in dem Verschlussteil (20) mindestens zwei Öffnungen (21, 22), die in einem bestimmten Abstand (T) voneinander angeordnet sind und eine voneinander verschiedene Position und Form aufweisen, und mindestens eine Verschlussfläche (23) vorgesehen sind, wobei die Antriebsvorrichtung (30) eine Antriebsteileinheit (31), eine Positionserfassungsteileinheit (32) und eine Steuerungsteileinheit (33) aufweist, die mit der Antriebsteileinheit (31) und der Positionserfassungsteileinheit (32) in einer signalübertragenden Verbindung steht, wobei die Steuerungsteileinheit (33) mit Sensoren (E1, E2) zur Ermittlung der physikalischen und/oder chemischen Eigenschaften der äußeren Umgebung (1) in einer signalübertragenden Verbindung steht, und wobei die Steuerungsteileinheit (33) eine Speichereinheit (33a) zur Speicherung von Referenzwerten aufweist, wobei des Weiteren das Verschlussteil (20) mit einem Regulierungsteil (40) gekoppelt ist, wobei das Regulierungsteil (40) mit Hilfe mindestens eines Abstandskörpers (3) durch einen Zwischenraum (TK) von dem Verschlussteil (20) getrennt ist, wobei das Regulierungsteil (40) mit einer Positionseinstellvorrichtung (50) versehen ist, wobei die Positionseinstellvorrichtung (50) eine Antriebsteileinheit (51) und eine Positionserfassungsteileinheit (52) aufweist, wobei des Weiteren die Antriebsteileinheit (51) und die Positionserfassungsteileinheit (52) mit der Steuerungsteileinheit (33) in einer signalübertragenden Verbindung stehen, wobei das Regulierungsteil (40) mit mindestens zwei Öffnungen (41, 42, 44) mit einer voneinander verschiedenen Position und Form und mit mindestens einer Verschlussfläche (43) versehen ist, wobei des Weiteren ein Übertragungskanal (60) in dem Zwischenraum (TK) zwischen dem Verschlussteil (20) und dem Regulierungsteil (40) gebildet ist, der zumindest teilweise von einer Begrenzungsfläche (61) umgeben ist, wobei das Verschlussteil (20) und das Regulierungsteil (40) entlang zweier Seiten des Übertragungskanals (60) so angeordnet sind, dass sie sich bewegen können, und wobei somit der Übertragungskanal (60) als ein Ergebnis der Öffnungen (21, 22, 41, 42, 44) in Abhängigkeit von den Positionen des Verschlussteils (20) und des Regulierungsteils (40) entweder teilweise oder vollständig geöffnet oder durch die Verschlussfläche (23, 43) für Bienen und Ungeziefer undurchdringlich verschlossen ist.

2. Regulierungsvorrichtung nach Anspruch 1, **dadurch gekennzeichnet, dass** in der Nähe des Zugangsdurchgangs (60) in dem Zwischenraum (TK) ein zusätzlicher Kanal (70) gebildet ist, der zumindest teilweise von einer Begrenzungsfläche (71) umgeben ist, wobei der zusätzliche Kanal (70) eine Ausgangsöffnung (72), die sich zu der äußeren Umgebung (1) hin öffnet, und eine Eingangsöffnung (74), die sich zu dem Innenraum (11) des Bienenstocks (10) hin öffnet, aufweist, und wobei ein Durchgangsrichtungsbegrenzungsteil (73) zwischen der Ausgangsöffnung (72) und der Eingangsöffnung (74) in dem zusätzlichen Kanal (70) derart angeordnet ist, dass es bewegt werden kann.

3. Regulierungsvorrichtung nach Anspruch 2, **dadurch gekennzeichnet, dass** das Regulierungsteil (40) eine Bewegungsbahn aufweist, die auch vor die Eingangsöffnung (72) des zusätzlichen Kanals (70) führt, wobei somit die Eingangsöffnung (72) des zusätzlichen Kanals (70) durch die Öffnungen (41, 42, 44) in Abhängigkeit von der Stellung des Regulierungsteils (40) teilweise oder vollständig geöffnet oder durch die Verschlussfläche (43) verschlossen ist.

4. Regulierungsvorrichtung nach einem der Ansprüche 1 bis 3, **dadurch gekennzeichnet, dass** in dem Zwischenraum (TK) in der Nähe des Übertragungskanals (60) oder des zusätzlichen Kanals (70) ein zumindest teilweise von einer Begrenzungsfläche (81) umgebener Eingangshilfsdurchgang (80) ausgebildet ist, wobei der Eingangshilfsdurchgang (80) eine mit der äußeren Umgebung (1) verbundene Eingangsöffnung (82) und eine Ausgangsöffnung (84), die sich zu dem Innenraum (11) des Bienenstocks (10) hin öffnet, aufweist, wobei in dem Eingangshilfsdurchgang (80) zwischen der Eingangsöffnung (82) und der Ausgangsöffnung (84) ein Austrittsverhinderungsteil (83) derart angeordnet ist, dass es sich bewegen kann.

5. Regulierungsvorrichtung nach Anspruch 4, **dadurch gekennzeichnet, dass** auch das Verschlussteil (20) eine Bewegungsbahn aufweist, die vor die Eingangsöffnung (82) des Eingangshilfsdurchgangs (80) führt, und wobei somit die Eingangsöffnung (82) des Eingangshilfsdurchgangs (80) durch die Öffnungen (21, 22) in Abhängigkeit von der Stellung des Verschlussteils (20) teilweise oder vollständig geöffnet oder durch die Verschlussfläche (23) verschlossen ist.

6. Regulierungsvorrichtung nach einem der Ansprüche 1 bis 5, **dadurch gekennzeichnet, dass** die mit dem Verschlussteil (20) verbundene Antriebsteileinheit (31) und/oder die mit dem Regulierungsteil (40) verbundene Antriebsteileinheit (51) ein mit einem Elektromotor versehener Mechanismus ist.

7. Regulierungsvorrichtung nach Anspruch 6, **dadurch gekennzeichnet, dass** die mit der Antriebsteileinheit (31) zusammenwirkende Positionserfassungsteileinheit (32) und/oder die mit dem Regulierungsteil (40) zusammenwirkende Positionserfassungsteileinheit (52) eine digitale Signalübertragungseinrichtung ist.

8. Regulierungsvorrichtung nach einem der Ansprüche 1 bis 7, **dadurch gekennzeichnet, dass** von den Öffnungen (41, 42, 44) des Regulierungsteils (40) die eine eine Gruppe von aneinandergereihten Bohrungen mit einem Durchmesser zwischen 4,8 und 5,5 mm umfasst, wobei eine andere eine Gruppe von Bohrungen mit einem Durchmesser zwischen 6 und 10 mm umfasst.

9. Regulierungsvorrichtung nach einem der Ansprüche 1 bis 8, **dadurch gekennzeichnet, dass** die Öffnungen (21, 22) des Verschlussteils (20) einen Schlitz oder eine angeordnete Gruppe von Schlitzen mit einer größten Öffnungsgröße von weniger als 3 mm aufweisen.

10. Regulierungsvorrichtung nach einem der Ansprüche 1 bis 9, **dadurch gekennzeichnet, dass** das Verschlussteil (20), das Regulierungsteil (40), die Antriebsvorrichtung (30), die Positionseinstellvorrichtung (50), der Abstandskörper (3) und der Übertragungskanal (60) in einem einzigen Gehäuse (4) angeordnet sind.

11. Regulierungsvorrichtung nach einem der Ansprüche 1 bis 10, **dadurch gekennzeichnet, dass** in dem unteren Teil (62) der Begrenzungsfläche (61) des Übertragungskanals (60), der dem den Bienenstock (10) tragenden Träger (2) zugewandt ist, Pollenabgabeöffnungen (63) mit einer größten Öffnungsgröße von weniger als 5,1 mm ausgebildet sind.

## Revendications

1. Dispositif de régulation du mouvement d'abeilles pour des ruches, qui comporte une pièce de fermeture (20) située à proximité du passage d'accès (12) reliant l'espace intérieur (11) de la ruche (10) à l'environnement extérieur (1) de la ruche (10), et mobile à l'intérieur de la section du passage d'accès (12), et l'élément de fermeture (20) est relié à un dispositif de propulsion (30), **caractérisé en ce qu'**au moins deux ouvertures (21, 22) positionnées à une distance donnée (T) l'une de l'autre, avec une position et une forme différentes l'une de l'autre, et au moins une surface de fermeture (23) sont établies dans la pièce de fermeture (20), le dispositif de propulsion (30) a une unité d'entraînement (31), une unité de détection de position (32) et une unité de commande (33) en liaison de transmission de signaux avec l'unité d'entraînement (31) et l'unité de détection de position (32), où l'unité de commande (33) est en liaison de transmission de signaux avec des capteurs (E1, E2) permettant de déterminer des caractéristiques physiques et/ou chimiques de l'environnement extérieur (1), et l'unité de commande (33) a une unité de mémoire (33a) destinée à stocker des valeurs de référence, en outre la pièce de fermeture (20) est couplée à une pièce de régulation (40), où la pièce de régulation (40) est séparée de la pièce de fermeture (20) par un espace (TK) à l'aide d'au moins un corps d'entretoise (3), la pièce de régulation (40) est pourvue d'un dispositif d'ajustement de position (50), et le dispositif d'ajustement de position (50) a une unité de propulsion (51) et une unité de détection de position (52), en outre l'unité de propulsion (51) et l'unité de détection de position (52) sont en liaison de transmission de signaux avec l'unité de commande (33), la pièce de régulation (40) est pourvue d'au moins deux ouvertures (41, 42, 44) de position et de forme différentes l'une de l'autre, et d'au moins une surface de fermeture (43), en outre un canal de transfert (60) est établi dans l'espace (TK) entre la pièce de fermeture (20) et la pièce de régulation (40) qui est au moins partiellement entouré par une surface de délimitation (61), et la pièce de fermeture (20) et la pièce de régulation (40) sont agencées le long de deux côtés du canal de transfert (60) de manière à pouvoir se déplacer, et par conséquent le canal de transfert (60) est soit partiellement ou complètement ouvert suite aux ouvertures (21, 22, 41, 42, 44) dépendant des positions de la pièce de fermeture (20) et de la pièce de régulation (40) soit fermé de manière impénétrable aux abeilles et aux organismes nuisibles par la surface de fermeture (23, 43).

2. Dispositif de régulation selon la revendication 1, **caractérisé en ce qu'**un canal supplémentaire (70) entouré au moins partiellement d'une surface de délimitation (71) est établi à proximité du passage d'accès (60) dans l'espace (TK), où le canal supplémentaire (70) a une ouverture de sortie (72) qui s'ouvre sur l'environnement extérieur (1) et une ouverture d'entrée (74) qui s'ouvre sur l'espace intérieur (11) de la ruche (10), et une pièce de limitation de direction de passage (73) est agencée entre l'ouverture de sortie (72) et l'ouverture d'entrée (74) dans le canal supplémentaire (70) de manière à pouvoir être déplacé.

3. Dispositif de régulation selon la revendication 2, **caractérisé en ce que** la pièce de régulation (40) présente une trajectoire de mouvement qui mène également devant l'ouverture d'entrée (72) du canal supplémentaire (70), et par conséquent l'ouverture d'entrée (72) du canal supplémentaire (70) est partiellement ou entièrement ouvert par les ouvertures (41, 42, 44) dépendant de la position de la pièce de régulation (40) ou fermé par la surface de fermeture (43).

4. Dispositif de régulation selon l'une quelconque des revendications 1 à 3, **caractérisé en ce qu'**un passage auxiliaire d'entrée (80) entouré au moins partiellement d'une surface de délimitation (81) est établi dans l'espace (TK) à proximité du canal de transfert (60) ou le canal supplémentaire (70), où le passage auxiliaire d'entrée (80) a une ouverture d'entrée (82) reliée à l'environnement extérieur (1), et une ouverture de sortie (84) qui s'ouvre sur l'espace intérieur (11) de la ruche (10), et une pièce de prévention de sortie (83) est agencée dans le passage auxiliaire d'entrée (80) entre l'ouverture d'entrée (82) et l'ouverture de sortie (84) de manière à pouvoir se déplacer.

5. Dispositif de régulation selon la revendication 4, **caractérisé en ce que** la pièce de fermeture (20) a également une trajectoire de mouvement qui mène devant l'ouverture d'entrée (82) du passage auxiliaire d'entrée (80), et par conséquent l'ouverture d'entrée (82) du passage auxiliaire d'entrée (80) est partiellement ou entièrement ouvert par les ouvertures (21, 22) dépendant de la position de la pièce de fermeture (20) ou fermé par la surface de fermeture (23).

6. Dispositif de régulation selon l'une quelconque des revendications 1 à 5, **caractérisé en ce que** l'unité d'entraînement (31) reliée à la pièce de fermeture (20) et/ou l'unité de propulsion (51) reliée à la pièce de régulation (40) est un mécanisme pourvu d'un moteur électrique.

7. Dispositif de régulation selon la revendication 6, **caractérisé en ce que** l'unité de détection de position (32) coopérant avec l'unité d'entraînement (31) et/ou l'unité de détection de position (52) coopérant avec la pièce de régulation (40) est un émetteur de signal numérique.

8. Dispositif de régulation selon l'une quelconque des revendications 1 à 7, **caractérisé en ce que** parmi les ouvertures (41, 42, 44) de la pièce de régulation (40) l'une comprend un groupe d'alésages alignés les uns à côté des autres d'un diamètre compris entre 4,8 et 5,5 mm, une autre comprend un groupe d'alésages d'un diamètre compris entre 6 et 10 mm.

9. Dispositif de régulation selon l'une quelconque des revendications 1 à 8, **caractérisé en ce que** les ouvertures (21, 22) de la pièce de fermeture (20) comprennent une fente ou groupe de fentes agencées de plus grande taille d'ouverture inférieure à 3 mm.

10. Dispositif de régulation selon l'une quelconque des revendications 1 à 9, **caractérisé en ce que** la pièce de fermeture (20), la pièce de régulation (40), le dispositif de propulsion (30), le dispositif d'ajustement de position (50), le corps d'entretoise (3) et le canal de transfert (60) sont situés dans un même boîtier (4).

11. Dispositif de régulation selon l'une quelconque des revendications 1 à 10, **caractérisé en ce que** des ouvertures de libération de pollen (63) de plus grande taille d'ouverture inférieure à 5,1 mm sont établies dans la partie inférieure (62) de la surface de délimitation (61) du canal de transfert (60) faisant face au support (2) portant la ruche (10).
